# EUROPÄISCHE PATENTSCHRIFT

(11) **EP 1 332 078 B1**
(45) Veröffentlichungstag und Bekanntmachung des Hinweises auf die Patenterteilung: **17.08.2005**
(21) Anmeldenummer: 01988674.6
(22) Anmeldetag: 26.10.2001
(51) Int. Cl.: B60S 1/40

(54) **GELENKFREIES WISCHBLATT, INSBESONDERE FÜR EIN KRAFTFAHRZEUG**
JOINTLESS WIPER BLADE, IN PARTICULAR FOR A MOTOR VEHICLE
BALAI D'ESSUIE-GLACE SANS ARTICULATION, EN PARTICULIER POUR UN VEHICULE AUTOMOBILE

(30) Priorität: 28.10.2000 DE 10053602
(43) Veröffentlichungstag der Anmeldung: 06.08.2003
(73) Patentinhaber: ROBERT BOSCH GMBH, 70442 Stuttgart (DE)
(72) Erfinder: BASEOTTO, Michel, B-3550 Hasselt (BE); WILMS, Christian, B-3582 Beringen (BE); VANGEEL, Tom, B-3540 Herk-de-Stad (BE); VERELST, Hubert, B-3300 Tienen (BE); BREESCH, Frans, B-3840 Borgloon (BE)
(86) Internationale Anmeldenummer: PCT/DE2001/004025
(87) Internationale Veröffentlichungsnummer: WO 2002/034595

(56) Entgegenhaltungen:
- DE-A- 2 313 689
- DE-A- 19 907 629

## Beschreibung

### Stand der Technik

Die Erfindung betrifft ein gelenkfreies Wischblatt, insbesondere für ein Kraftfahrzeug nach Gattung des unabhängigen Anspruchs. Ein derartiges Wischblatt ist z.B. aus der DE-A-2 313 689 bekannt.

Es sind schon zahlreiche gelenkfreie Wischblätter, beispielsweise aus der DE-A-197 36 368 bekannt, bei denen ein Tragelement mit einer Wischleiste verbunden ist, und das Tragelement zur Verbindung mit dem Wischerarm des Kraftfahrzeugs ein Verbindungsmittel aufweist. Diese Verbindungsmittel müssen leicht zu verbinden und zu lösen sein, da die Wischblätter im Regelfall nicht von einem Fachmann, sondern vom Halter des Kraftfahrzeugs gewechselt werden.

Darüber hinaus müssen die Verbindungsmittel sehr große Kräfte vom Wischerarm auf das Wischblatt übertragen um ein sauberes Wischen, besonders bei hohen Geschwindigkeiten des Kraftfahrzeugs, zu gewährleisten.

Weiterhin sind bereits zahlreiche Verbindungsmittel, beispielsweise aus DE-A-27 56 317 bekannt, die zur Befestigung von konventionellen Wischblättern an Wischerarmen von Kraftfahrzeugen dienen. Diese können jedoch nicht auf gelenkfreie Wischblätter übertragen werden, da diese über kein Tragbügelsystem verfügen, an welchem der Wischerarm befestigt werden kann.

Die DE-A-2313689 zeigt ein gelenkfreies Wischblatt, das ein Verbindungsmittel aufweist, das seinerseits mit einem Tragelement verklammert ist und andererseits eine Nut zur Aufnahme einer Achse eines Wischerarms umfasst. Um die Verbindung zwischen wischerarm und Wischblatt zu sicheren, ist ein Schiebeelement vorgesehenen, das aufwendig vorgebogen im Verbindungsmittel verschiebbar sitzt.

### Vorteile der Erfindung

Das erfindungsgemäße gelenkfreie Wischblatt mit den Merkmalen des Hauptanspruchs hat den Vorteil, dass am Tragelement, das mit der Wischleiste verbunden ist, Verbindungsmittel angeordnet sind, die zur Verbindung des Wischblattes mit einem Wischerarm dienen, wobei das Verbindungsmittel ein Klammerteil und ein Nutenteil umfasst. Das Klammerteil kann kostengünstig als Biegestanzteil ausgebildet werden und damit auf einfache Weise an den Tragelementen angeschweißt und/oder festgeklemmt werden. Außerdem kann das Nutenteil als Spritzgussteil - beispielsweise aus Kunststoff oder einer Metallegierung - ausgebildet werden und durch diese volumenhafte Ausbildung einem Verbindungselement des Wischerarms optimalen Halt bieten. Besonders vorteilhaft ist es, wenn die Nut Nutnasen derart aufweist, dass ein abgeflachter Bolzen in die Nut geschoben werden kann und durch eine etwa Vierteldrehung des Bolzens radial festlegbar ist. Damit ist der Bolzen nur noch axial verschiebbar solange er nur unwesentlich verdreht wird. Durch eine weitere Vierteldrehung oder durch eine Vierteldrehung zurück kann der Bolzen wieder aus der Nut entfernt werden.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist es, wenn das Verbindungsmittel etwa mittig der Längserstreckung des mindestens einen Tragelements angeordnet ist, da sich so eine optimale Kraftübertragung auf die Wischleiste ergibt und die Drehmomente, die auf das Verbindungsmittel wirken, minimiert werden.

Dazu ist es vorteilhaft, wenn das Verbindungsmittel eine schlüssellochartige Nut aufweist, die zur Aufnahme mindestens eines zumindest teilweise abgeflachten Bolzens, der am Wischerarm angeordnet ist, dient. Auf diese Weise entsteht eine Verdrehsicherung, durch die Wischerarm und Wischblatt ohne bewegliche Teile miteinander verbunden werden können. Dies ist insbesondere deshalb vorteilhaft, da viele Kunststoffe mit steigender Lebensdauer, insbesondere bei hoher UV-Einstrahlung durch Sonnenlicht, spröde werden. Dadurch brechen Schnappnasen, Klipse und andere bewegliche Teile leicht ab oder müssen aus Metall ausgebildet werden.

Ist die schlüssellochartige Nut, die den Bolzen des Wischerarms aufzunehmen vermag, quer zur Längserstreckung des Nutenteils angeordnet, so können die Antriebskräfte optimal auf das Wischblatt übertragen und die auf das Tragelement wirkenden Kippmomente minimiert werden.

Weiterhin ist es vorteilhaft, wenn das Klammerteil mindestens eine Klammer aufweist, die das Nutenteil am Ende seiner Längserstreckung umklammert. Durch die Umklammerung an den Enden werden die Anlenkpunkte, und damit die Kraftübertragungspunkte zwischen dem mit dem Bolzen verbindbaren Nutenteil und dem mit dem Tragelement verbundenen Klammerteil so gewählt, dass durch große Hebelarme die benötigten Kräfte minimiert werden.

Darüber hinaus ist es als vorteilhaft anzusehen, wenn das Klammerteil mindestens eine Lippe aufweist, die das Tragelement umklammert, um eine feste Verbindung zwischen Klammerteil und Tragelement zu gewährleisten.

Besonders vorteilhaft ist es, wenn das Nutenteil mindestens eine Klammernut zur Aufnahme der Klammer des Klammerteils aufweist. Dadurch weist das Verbindungsmittel aus Klammer- und Nutenteil eine im Wesentlichen ebene Oberfläche auf, an die sich beispielsweise die Lateralflanken des Wischerarms anschmiegen können. So ergibt sich eine verbesserte Führung des Wischerarms am Verbindungsmittel.

Dabei ist es besonders vorteilhaft, wenn die Längserstreckung des Klammerteils dieselbe Länge aufweist, wie das Nutenteil in seiner Längserstreckung.

Weiterhin ist es von Vorteil, wenn das Klammerteil aus gestanztem und gebogenem Blech und das Nutenteil aus Kunststoff ausgebildet sind, da diese Teile auf diese Weise sehr kostengünstig herzustellen sind und den jeweiligen Anforderungen in optimaler Weise gerecht werden.

### Zeichnungen

Ein Ausführungsbeispiel der Erfindung ist in den Zeichnungen dargestellt und in der nachfolgenden Beschreibung näher erläutert. Es zeigen:
Figur 1 ein erfindungsgemäßes gelenkfreies Wischblatt in perspektivischer Darstellung,
Figur 2 ein montiertes Verbindungsmittel und ein Ende eines Wischerarms in perspektivischer Darstellung,
Figur 3 ein Klammerteil eines Verbindungsmittels in perspektivischer Darstellung,
Figur 4a ein Nutenteil eines Verbindungsmittels in perspektivischer Darstellung,
Figur 4b ein Nutenteil eines Verbindungsmittels in einer Seitenansicht,
Figur 5 ein erfindungsgemäßes gelenkfreies Wischblatt beim Verbindungsvorgang mit einem Wischarm und
Figur 6 den Verbindungsbereich zwischen dem erfindungsgemäßen gelenkfreien Wischblatt und einem Wischerarm aus Figur 1 im Detail.

### Beschreibung des Ausführungsbeispiels

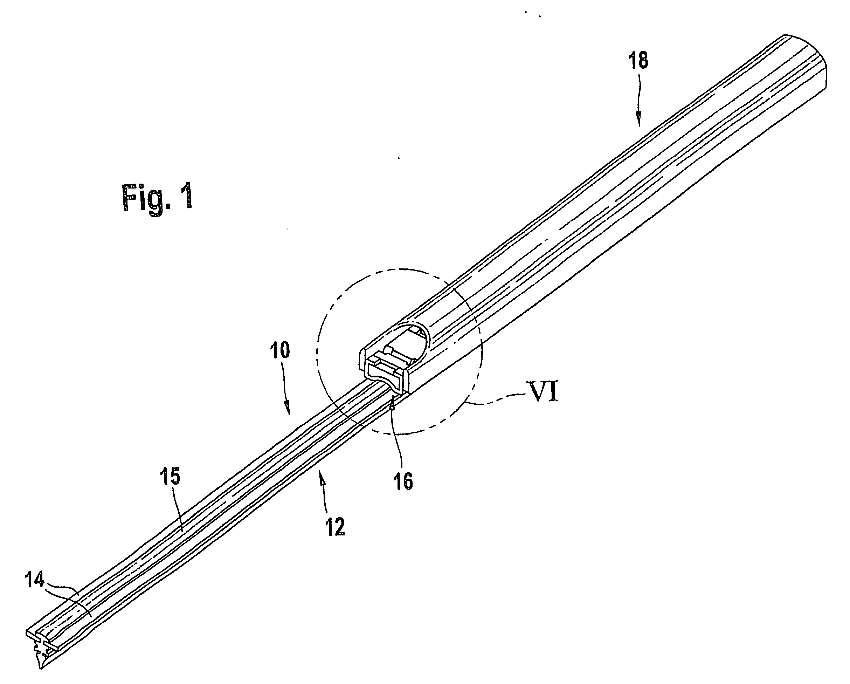

In Figur 1 ist ein erfindungsgemäßes gelenkfreies Wischblatt 10 dargestellt. Im Gegensatz zu konventionellen Wischblättern, die über ein Tragbügelsystem verfügen, umfaßt das gelenkfreie Wischblatt 10 lediglich eine Wischleiste 12, die zwischen zwei Federschienen 14 als Tragelemente gehalten ist. Im unbelasteten Zustand, wenn das Wischblatt 10 also frei im Raum steht, erscheint es entlang seiner Längserstreckung gekrümmt. Dadurch ergibt sich auf der Seite, die im Betrieb der zu wischenden Fläche zugewandt ist, eine konkave Krümmung und auf gegenüberliegenden Seite eine konvexe Krümmung. Der Teil der Wischleiste 12, der auf der konvexen Seite der Federschienen 14 angeordnet ist, wird im folgenden als Rücken 15 bezeichnet. An diesem ist häufig ein Spoiler als Strömungsleitelement befestigt oder angeformt.

Bei Auflage auf eine Wischfläche, beispielsweise auf eine Scheibe eines Fahrzeugs, erzeugen die Federschienen 14 eine Vorspannung. Dadurch entsteht eine Auflagekraft, die eine sichere Auflage der Wischleiste 12 auf der zu wischenden Fläche gewährleistet.

An den Federschienen 14 ist etwa mittig entlang ihrer Längserstreckung ein Verbindungsmittel 16 angeordnet, das zum Verbinden des Wischblatts 10 mit einem Wischerarm 18 dient.

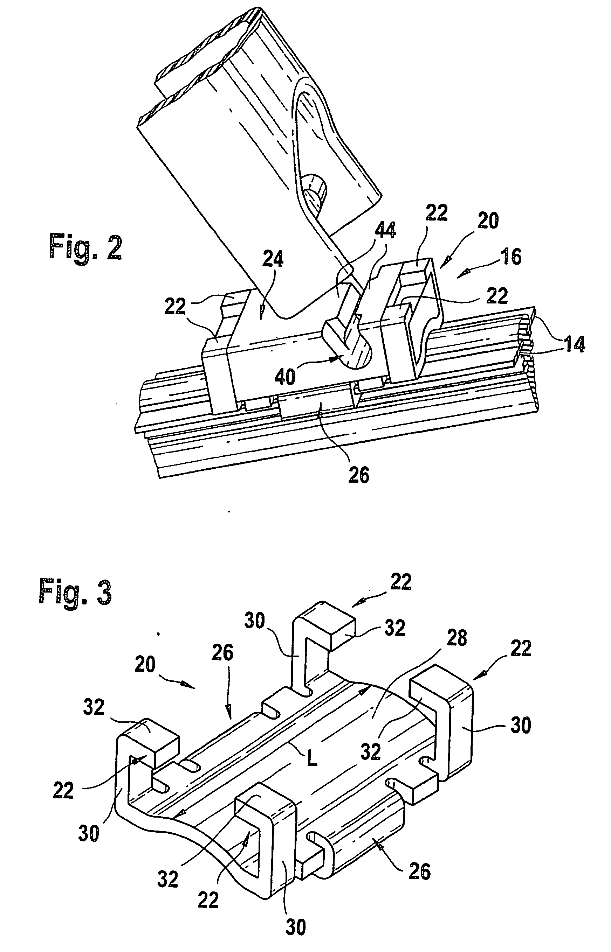

In Figur 2 ist dieses Verbindungsmittel 16 detailliert dargestellt. Es umfaßt ein Klammerteil 20, welches mittels vier Klammern 22 ein Nutenteil 24 umklammert. Das Klammerteil 20 selbst ist an den Federschienen 14 angeschweißt und mittels Lippen 26 zusätzlich an den Federschienen 14 festgeklemmt.

In Figur 3 ist das Klammerteil 20 en detail dargestellt. Das Klammerteil 20 umfaßt eine etwa rechteckige Platte 28, welche im Schnitt quer zu ihrer Längserstreckung eine Krümmung aufweist. Die Krümmung ist dabei so gewählt, dass der Rücken 15 der Wischleiste 12 unter der Platte 28 aufgenommen werden kann wobei die Längskanten der rechteckigen Platte 28 auf den Federschienen 14 zu liegenden kommen. Die Klammern 22 werden aus zwei Klammerbereichen 30, 32 gebildet. Der erste Klammerbereich 30 erstreckt sich an der Längskante der rechteckigen Platte 28 senkrecht zur Ebene der Platte 28 hinaus. Der zweite Klammerbereich 32 schließt sich direkt an den ersten Klammerbereich 30 an und verläuft in einer Biegung von 90° Grad zu demselben.

Auf diese Weise ergibt sich ein klammerartiger Verschluß zwischen der Platte 28 und dem zweiten Klammerbereich 32. Die Klammern 22 sind dabei jeweils an den Enden der Längserstreckung des Klammerteils 20 angeordnet. Im mittleren Bereich entlang der Längserstreckung des Klammerteils 20 sind die Lippen 26 angeordnet, welche in Richtung der Federschienen (Figur 2), also den Klammerbereichen 30, 32 entgegengesetzt, umgebogen sind. Die Federschienen 14 werden so von den Lippen 26 umklammert.

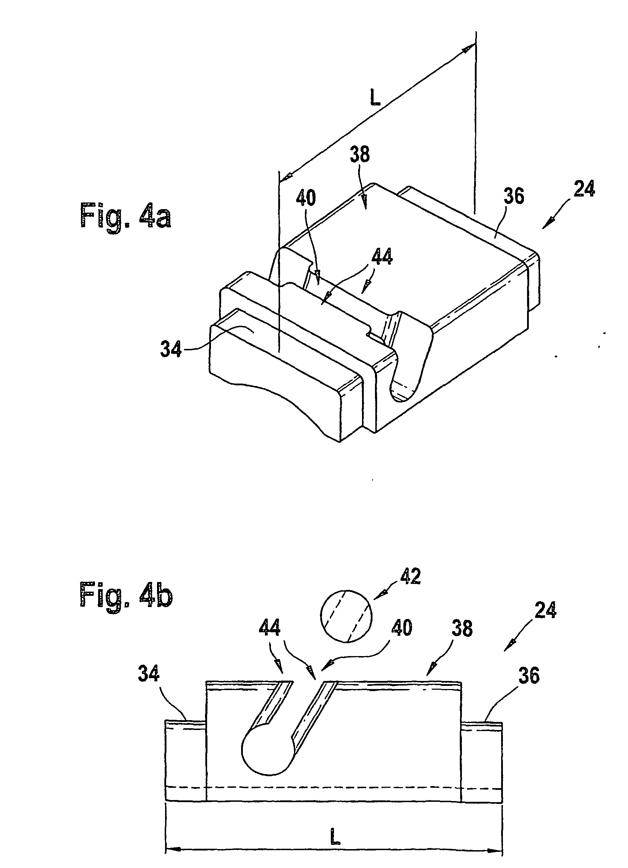

In Figur 4a ist das Nutenteil 24 in einer perspektivischen Darstellung gezeigt. Das Nutenteil 24 ist im Wesentlichen von quaderförmiger Gestalt und weist entlang seiner Längserstreckung, auf der in montierter Position der Platte 28 zugewandten Seite, eine konkave Wölbung auf. Entlang seiner Längserstreckung sind an den Enden eine erste Klammernut 34 sowie eine zweite Klammernut 36 angeordnet, die in montierter Position zur Aufnahme der Klammern 22 dienen. Diese Klammernuten 34, 36 können wie hier gezeigt, verkrüppelt ausgebildet sein, so dass nur eine Stufe anstatt einer echten Nut entsteht. Dies ist jedoch nur dann sinnvoll möglich, wenn entlang der Längserstreckung des Nutenteils 24 mehrere Klammern 22 vorgesehen sind und die Stufen entgegengesetzt zueinander verlaufen um ein herausrutschen des Nutenteils 24 aus den Klammern 22 zu verhindern.

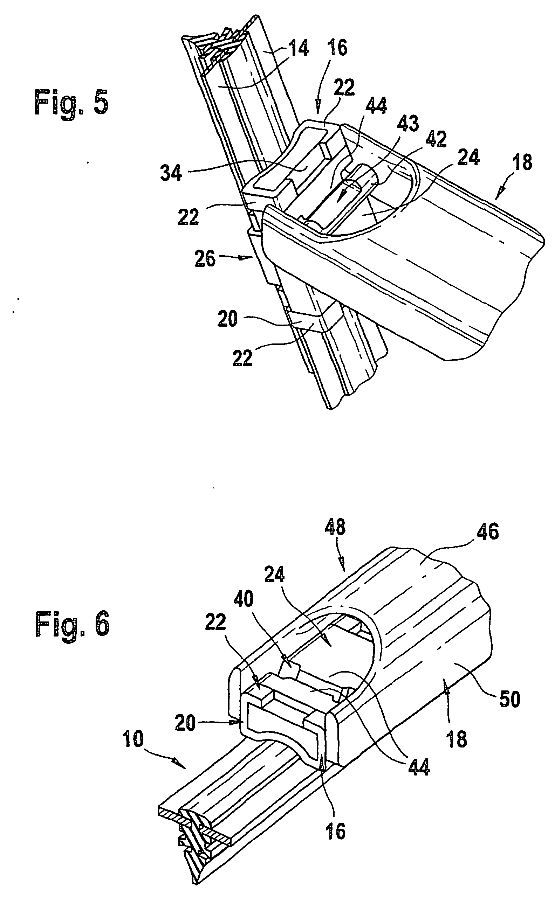

Im mittleren Bereich 38 des Nutenteils 24 ist eine im Querschnitt schlüssellochartige Nut 40 vorgesehen, in die ein teilweise abgeflachter Bolzen 42 (Figur 5) aufgenommen werden kann.

Figur 4b zeigt das Nutenteil 24 in einer Seitenansicht. An den Enden der Längserstreckung mit der Länge L des Nutenteils 24 sind die Klammernuten 34, 36 angeordnet. Im mittleren Bereich 38 des Nutenteils 24 ist die schlüssellochartige Nut 40 angeordnet, welche im Wesentlichen die Breite eines aufzunehmenden Bolzens 42 hat und deren Nutgrund derart gekrümmt ist, dass ein zylindrischer Bolzen darin zu gleiten vermag. Am Einschnitt der Nut 40 weist diese Nutnasen 44 auf, die beim Einfügen eines abgeflachten Bolzens 42 gerade in die abgeflachten Bereiche des Bolzens 42 reichen, so daß die Nut 40 in dieser Seitenansicht der Form eines umgedrehten Schlüssellochs entspricht. Die Nut 40 umfaßt im Querschnitt daher einen rechteckigen Abschnitt, an den sich ein runder Abschnitt anschließt, wobei der rechteckige Abschnitt in Richtung der Längserstreckung des Nutenteils 24 kleiner ist als der Durchmesser des runden Abschnitts.

Auf diese Weise kann der Bolzen 42 in die Nut 40 eingefügt werden, und ist nach einer Vierteldrehung um seine Längsachse in der Nut 40 so radial fixiert, daß er nicht herausfallen kann, sofern er nicht wesentlich in azimutaler Richtung verdreht wird.

In Figur 5 ist dies genauer dargestellt. An den Federschienen 14 des Wischblattes ist das Klammerteil 20 festgeschweißt und mit den Lippen 26 festgeklammert. Das Klammerteil 20 wiederum hält mittels der Klammern 22, die in die Klammernuten 34, 36 des Nutenteils 24 eingreifen, das Nutenteil 24 fest. Der Bolzen 42 der den U-förmigen Wischerarm 18 an seinem freien Ende brückenartig durchgreift, weist in einem Abschnitt um die Mitte seiner Längserstreckung einen abgeflachten Bereich 43 auf, so dass dieser in die Nut 40 des Nutenteils 24, an den Nutnasen 44 vorbei, eingesetzt werden kann.

In Figur 6 ist das Verbindungsmittel 16 des Wischblattes 10 mit dem Wischerarm 18 in montierter Position in perspektivischer Darstellung gezeigt. Das Nutenteil 24 wird durch die Klammern 22 des Klammerteils 20 gehalten und ist so fest mit der Federschiene 14 und der Wischleiste 12 verbunden. In der Nut 40, mit den Nutnasen 44 sitzt der Bolzen 42 des Wischerarms 18.

Der Wischerarm 18 ist von im Wesentlichen U-förmiger Gestalt und umfaßt daher einem Wischarmboden 46 und zwei Lateralflanken 48, 50 zwischen denen der Bolzen 42 mit seinen abgeflachten Bereichen 43 drehfest eingesetzt ist. Die beiden Lateralflanken 48, 50 des Wischerarms 18 schmiegen sich direkt an die Seitenflächen des Verbindungsmittels, also an die Seitenflächen des Nutenteils 24 und des Klammerteils 20, so dass das Verbindungsmittel im Wesentlichen im U-förmigen Wischerarm 18 aufgenommen ist.

In einer Variation der Erfindung können Nutenteil 24 und Klammerteil 20 auch einstückig ausgebildet sein. Weiterhin ist es möglich das Klammerteil 20 direkt aus dem Tragelement 14 heraus zu formen. Natürlich können diese beiden Möglichkeiten auch kombiniert werden. In einer weiteren Variation kann das Tragelement 14 auch einstückig mit der Wischleiste 12 ausgebildet sein. Dies ist beispielsweise durch eine geeignete Wahl des Polymers und des Herstellungverfahrens möglich, durch das die Wischleiste 12 hergestellt ist.

## Patentansprüche

1. Gelenkfreies Wischblatt (10), insbesondere für ein Kraftfahrzeug, mit mindestens einem Tragelement (14) und zumindest einer, mit dem mindestens einen Tragelement (14) verbundenen Wischleiste (12) und einem, mit dem Tragelement (14) verbundenen Verbindungsmittel (16) zur Verbindung des Wischblattes (10) mit einem Wischerarm (18) wobei das Verbindungsmittel (16) ein Klammerteil (20) und ein Nutenteil (24) mit einer Nut (4o) umfasst, **dadurch gekennzeichnet, dass** die Nut (40) Nutnasen (44) derart aufweist, dass ein abgeflachter Bolzen (42) in die Nut (40) einbringbar ist und durch eine Teildrehung, insbesondere etwa Vierteldrehung des Bolzens (42) radial festlegbar ist.

2. Gelenkfreies Wischblatt (10) nach Anspruch 1, **dadurch gekennzeichnet, daß** das Verbindungsmittel (16) etwa mittig der Längserstreckung des mindestens einen Tragelements (14) angeordnet ist.

3. Gelenkfreies Wischblatt () nach Anspruch 1 oder 2, **dadurch gekennzeichnet, daß** das Verbindungsmittel (16), insbesondere das Nutenteil (), eine schlüssellochartige Nut (40) zur Aufnahme mindestens eines Bolzens (42) aufweist

4. Gelenkfreies Wischblatt (10) nach einem der vorhergehenden Ansprüche, **dadurch gekennzeichnet, daß** das Klammerteil (20) mit dem mindestens einen Tragelement (14) verbunden ist.

5. Gelenkfreies Wischblatt (10) nach einem der vorhergehenden Ansprüche, **dadurch gekennzeichnet, daß** die schlüssellochartige Nut (40) quer zur Längserstreckung des Verbindungsmittels (16) angeordnet ist.

6. Gelenkfreies Wischblatt (10) nach einem vorhergehenden Ansprüche, **dadurch gekennzeichnet, daß** das Klammerteil (20) mindestens eine Klammer (22) aufweist, die das Nutenteil (24), insbesondere an mindestens einem Ende seiner Längserstreckung, umklammert.

7. Gelenkfreies Wischblatt (10) nach einem der vorhergehenden Ansprüche, **dadurch gekennzeichnet, daß** das Klammerteil (20) mindestens eine Lippe (26) aufweist, die das Tragelement (14) umklammert.

8. Gelenkfreies Wischblatt (10) nach Anspruch 6 oder 7 **dadurch gekennzeichnet, daß** das Nutenteil (24) mindestens eine Klammernut (34, 36) zur Aufnahme der Klammer (22) des Klammerteils (20) aufweist.

9. Gelenkfreies Wischblatt (10) nach einem der Ansprüche 3 bis 8, **dadurch gekennzeichnet, daß** das Klammerteil (20) in seiner Längserstreckung dieselbe Länge (L) aufweist wie das Nutenteil (24) in seiner Längserstreckung.

10. Gelenkfreies Wischblatt (10) nach einem der Ansprüche 3 bis 9, **dadurch gekennzeichnet, daß** das Klammerteil (20) aus gestanztem und gebogenen Blech und das Nutenteil (24) aus Kunststoff ausgebildet sind.

## Claims

1. Jointless wiper blade (10), in particular for a motor vehicle, having at least one supporting element (14) and at least one wiper strip (12) connected to the at least one supporting element (14), and a connecting means (16), which is connected to the supporting element (14) and is intended for connecting the wiper blade (10) to a wiper arm (18), the connecting means (16) comprising a clip part (20) and a groove part (24) with a groove (40), **characterized in that** the groove (40) has groove lugs (44) in such a manner that a flattened pin (42) can be placed into the groove (40) and can be secured radially by means of a partial rotation, in particular approximately quarter-rotation of the pin (42).

2. Jointless wiper blade (10) according to Claim 1, **characterized in that** the connecting means (16) is arranged approximately in the centre of the longitudinal extent of the at least one supporting element (14).

3. Jointless wiper blade (10) according to Claim 1 or 2, **characterized in that** the connecting means (16), in particular the groove part (24), has a keyhole-like groove (40) for receiving at least one pin (42).

4. Jointless wiper blade (10) according to one of the preceding claims, **characterized in that** the clip part (20) is connected to the at least one supporting element (14).

5. Jointless wiper blade (10) according to one of the preceding claims, **characterized in that** the keyhole-like groove (40) is arranged transversely with respect to the longitudinal extent of the connecting means (16).

6. Jointless wiper blade (10) according to one of the preceding claims, **characterized in that** the clip part (20) has at least one clip (22) which clips around the groove part (24), in particular at at least one end of its longitudinal extent.

7. Jointless wiper blade (10) according to one of the preceding claims, **characterized in that** the clip part (20) has at least one lip (26) which clips around the supporting element (14).

8. Jointless wiper blade (10) according to Claim 6 or 7, **characterized in that** the groove part (24) has at least one clip groove (34, 36) for receiving the clip (22) of the clip part (20).

9. Jointless wiper blade (10) according to one of Claims 3 to 8, **characterized in that** the clip part (20) is of the same length (L) in its longitudinal extent as the groove part (24) in its longitudinal extent.

10. Jointless wiper blade (10) according to one of Claims 3 to 9, **characterized in that** the clip part (20) is formed from punched and bent sheet metal and the groove part (24) is formed from plastic.

## Revendications

1. Balai d'essuie-glace (10) sans articulation notamment pour un véhicule automobile, comportant au moins un élément de support (14) et au moins une lame d'essuyage (12) reliée à au moins un élément de support (14) ainsi qu'un moyen de liaison (16) relié à l'élément de support (14) pour relier le balai d'essuie-glace (10) à un bras d'essuie-glace (18), le moyen de liaison (16) se composant d'une pièce formant pince (20) et d'une pièce (24) ayant une rainure (40),
**caractérisé en ce que**
la rainure (40) comporte des becs de rainure (44) de façon qu'un axe avec méplat (42) puisse être introduit dans la rainure (40) et puisse y être fixé radialement par une rotation partielle notamment un quart de tour de l'axe (42).

2. Balai d'essuie-glace sans articulation (10) selon la revendication 1,
**caractérisé en ce que**
le moyen de liaison (16) est installé sensiblement au milieu de la longueur de l'élément de support (14).

3. Balai d'essuie-glace sans articulation (10) selon la revendication 1 ou 2,
**caractérisé en ce que**
le moyen de liaison (16) notamment la partie à rainure comporte une rainure (40) en forme de trou de serrure pour recevoir au moins un axe (42).

4. Balai d'essuie-glace sans articulation (10) selon l'une des revendications précédentes,
**caractérisé en ce que**
la pièce formant pince (20) est reliée à au moins un élément de support (14).

5. Balai d'essuie-glace sans articulation (10) selon l'une quelconque des revendications,
**caractérisé en ce que**
la rainure (40) en forme de trou de serrure est transversale à la direction longitudinale de la pièce de liaison (16).

6. Balai d'essuie-glace sans articulation (10) selon l'une quelconque des revendications,
**caractérisé en ce que**
la pièce formant pince (20) comporte au moins une pince (22) qui enserre la pièce à rainure (24) notamment à au moins une extrémité de sa longueur.

7. Balai d'essuie-glace sans articulation (10) selon l'une quelconque des revendications,
**caractérisé en ce que**
la pièce formant pince (20) comporte au moins une lèvre (26) qui enserre l'élément de support (14).

8. Balai d'essuie-glace sans articulation (10) selon les revendications 6 ou 7,
**caractérisé en ce que**
la pièce à rainure (24) comporte au moins une rainure à pince (34, 36) pour recevoir la pince (22) de la pièce en forme de pince (20).

9. Balai d'essuie-glace sans articulation (10) selon l'une des revendications 3 à 8,
**caractérisé en ce que**
la pièce en forme de pince (20) a dans sa direction longitudinale la même longueur (L) que la pièce à rainure (24) dans sa direction longitudinale.

10. Balai d'essuie-glace sans articulation (10) selon l'une des revendications 3 à 9,
**caractérisé en ce que**
la pièce formant pince (20) est une tôle emboutie et cintrée et la pièce à rainure (24) est en matière plastique.
